# EUROPÄISCHE PATENTSCHRIFT

(11) **EP 1 625 839 B1**
(45) Veröffentlichungstag und Bekanntmachung des Hinweises auf die Patenterteilung: **09.05.2007**
(21) Anmeldenummer: 05017292.3
(22) Anmeldetag: 09.08.2005
(51) Int. Cl.: A61G 5/10

(54) **Laufradanordnung für einen Rollstuhl**
Running wheel arrangement for a wheelchair
Ensemble roue pour chaise roulante

(30) Priorität: 14.08.2004 DE 102004039519
(43) Veröffentlichungstag der Anmeldung: 15.02.2006
(73) Patentinhaber: Otto Bock HealthCare IP GmbH & Co. KG, 37115 Duderstadt (DE)
(72) Erfinder: Brendel, Thomas, 74889 Sinsheim (DE); Perk, Heinz, 74858 Aglasterhausen (DE); Kretschmer, Oliver, 74889 Sinsheim (DE); Biederstädt, Andreas, 24147 Klausdorf (DE)
(74) Vertreter: Rehmann, Thorsten

(56) Entgegenhaltungen:
- DE-A1- 4 432 733
- DE-A1- 19 746 086

## Beschreibung

Die Erfindung betrifft eine Laufradanordnung für einen faltbaren, elektromotorisch antreibbaren Rollstuhl, mit dessen Rahmen Räder lösbar verbindbar sind, wobei in zwei Räder je ein Antriebsmotor integriert ist und die Verbindung dieser Räder über je einen am Rahmen angeordneten Adapter erfolgt und das mit dem Adapter eingesetzte Rad über eine Verriegelungseinrichtung gegenüber dem Rahmen verriegelbar ist.

Eine solche Laufradanordnung ist beispielsweise aus der DE 197 46 086 A1 bekannt. Für manuell betriebene Rollstühle gibt es elektrische Zusatzantriebe, um dem Anwender einen größeren Aktionsradius zu ermöglichen. Diese Zusatzantriebe geben ihre Antriebskraft über einen in der Nabe des Antriebsrades angeordneten Elektromotor weiter. Dieser Elektromotor wird vom Anwender über ein mit einem Joystick versehenes Bedienpult von der Armlehne aus gesteuert. Die elektrische Energie wird von einer Batterie, die meist mittig unter der Sitzfläche angeordnet ist, an das Antriebssystem geleitet. Eine Anforderung an einen Rollstuhl ist die Transportmöglichkeit in Kraftfahrzeugen bzw. die Möglichkeit, den Rollstuhl bei beengten Platzverhältnissen gut verstauen zu können. Um diese Anforderung zu erfüllen, sind die Antriebsräder mit einem Adaptionssystem versehen, die dem Anwender das Ankoppeln und Abnehmen der Räder vom Rollstuhlgestell erleichtern sollen.

Bei dem vorstehend beschriebenen System weist der mit dem Rahmen verbundenen Adapter eine zur Reifenaufstandsfläche geöffnete Nut auf. Das Hinterrad ist auf einer mit einem Schnellspannsystem versehenen Steckachse drehbar gelagert. Wie das Vorderrad eines Fahrrades kann das Antriebsrad in radialer Richtung mit der Achse in den Adapter eingeschoben und dort verriegelt werden.

Bei dem aus der EP 0 528 235 B1 bekannten Rollstuhl ist das Antriebsrad auch mit einer Steckachse versehen. Der Rahmen des Rollstuhls ist so ausgebildet, dass das Rad in axialer Richtung mit dem Rahmen verbindbar ist.

Zur Montage bzw. Demontage muss bei beiden Systemen der Rollstuhl einseitig angehoben werden. Die Handhabung ist deshalb für einen in seiner Bewegung eingeschränkten Anwender recht kompliziert.

Von dieser Problemstellung ausgehend soll die eingangs beschriebene Laufradanordnung so verbessert werden, dass die Montage und Demontage der Antriebsräder vom Rollstuhl vereinfacht wird.

Zur Problemlösung zeichnet sich eine gattungsgemäße Laufradanordnung durch folgende Merkmale aus:
a) am Antriebsmotor ist eine Schwenkplatte befestigt,
b) das Rad ist über einen Achsbolzen drehbar in der Schwenkplatte gelagert,
c) im Adapter ist ein in Fahrtrichtung weisender Gelenkbolzen angeordnet,
d) an einem Ende der Schwenkplatte ist eine im Querschnitt u-förmige Lasche angeordnet,
e) die Lasche ist auf den Gelenkbolzen so aufsetzbar, dass das Rad mittels einer Schwenkbewegung zum Rahmen verlagerbar ist, bis ein an der Schwenkplatte vorgesehener Verriegelungsbolzen an eine am Adapter angeordnete Verriegelungsbuchse eingreift und
f) das Rad über den Verriegelungsbolzen und die Verriegelungsbuchse mechanisch gegenüber dem Rahmen verriegelbar ist.

Die Öffnung der Lasche ist von der Aufstandsfläche des Rades wegweisend ausgebildet. Das Rad kann folglich in einem schrägen Winkel zum Boden bzw. zum Rahmen angesetzt und mit der Lasche auf den Gelenkbolzen aufgeschoben werden. Sodann wird das Rad nach oben geschwenkt und verriegelt selbsttätig am Rahmen. Ein Anheben des Rollstuhles ist dabei nicht notwendig. Zur Demontage wird die Verriegelung gelöst und das Rad zum Boden hin abgeschwenkt. Auch hierbei braucht der Rollstuhl nicht einseitig angehoben werden, da das Rad unter ihn wegschwenkbar ist.

Vorzugsweise sind der Verriegelungsbolzen und die Verriegelungsbuchse mit elektrischen Kontakten versehen, über die die Energieversorgung des in das Rad integrierten Antriebsmotors erfolgt.

Insbesondere vorteilhaft ist es, wenn die Verriegelungseinrichtung selbstverriegelnd ausbildet ist. Dadurch wird die Montage des Rades weiter vereinfacht.

Mit Hilfe einer Zeichnung soll ein Ausführungsbeispiel der Erfindung nachfolgend näher beschrieben werden. Es zeigt:
- Figur 1: die perspektivische Darstellung eines Rollstuhles;
- Figur 2: eine perspektische Teilansicht des Rollstuhls nach Figur 1;
- Figur 3: den Schnitt mittig zur Drehachse der Antriebsnabe durch die Laufradanordnung im nicht verbundenen Zustand;
- Figur 4: die Anordnung nach Figur 3 nach der Verbindung der Laufradanordnung;
- Figur 5: die Darstellung gemäß Figur 3 nach Verriegelung der Laufradanordnung;
- Figur 6: die perspektivische Darstellung der Anordnung nach Figur 4;
- Figur 7: die perspektivische Darstellung der Anordnung nach Figur 5.

Der Rollstuhl 11 besteht aus dem faltbaren Rahmen 2, mit dem die mit einem Naben-Antriebsmotor 1 versehenen Laufräder 12 lösbar verbunden sind. Die Antriebsmotoren 1 werden vom Anwender über ein mit einem Joystick 15 versehenes Bedienpult 14 von der Armlehne 16 aus gesteuert. Der Naben-Antriebsmotor 1 kann beispielsweise als getriebeloser Außenläufermotor mit elektrischer Kommutierung und elektromagnetischer Bremse ausgebildet sein. Es können elektrische und elektronische Schaltungskomponenten für den Antrieb vorgesehen sein. Die Energieversorgung der Antriebsmotoren 1 erfolgt über eine hier nicht dargestellte, unter dem Sitz angeordnete Batterie. Über die Speichen 20 sind die Antriebsmotore 1 und die Felgen 19 zum Rad 12 miteinander verbunden.

Die Verbindung zwischen dem Antriebsrad 12 und dem Rahmen 2 des Rollstuhls 11 erfolgt über eine scharnierartige Konstruktion. Mit dem Antriebsmotor 1 fest verbunden ist eine Schwenkplatte 3. Das Rad 12 ist über einen Achsbolzen 4 drehbar in der Schwenkplatte 3 gelagert. Der Achsbolzen 4 ragt über die Schwenkplatte 3 hinaus. An seinem der Aufstandsfläche des Rades 12 zugewandten Ende ist die Schwenkplatte 3 mit einer im Querschnitt U-förmigen Lasche 31 versehen. Die Öffnung 32 der Lasche 31 weist zu der der Reifenaufstandsfläche entgegengesetzten Richtung weg. An ihrem der Lasche 31 entgegengesetzten Ende weist die Schwenkplatte 3 einen Verriegelungsbolzen 5 auf. Der Verriegelungsbolzen 5 ist hohl und weist in seinem Inneren Kontakte 17 auf, die elektrisch mit dem Motor 1 verbunden sind.

Am Rahmen 2 fest verbunden ist ein Adapter 7. Zwischen zwei Lagerböcken 7A, 7B ist in der Reifenaufstandsfläche nahe im Bereich des Adapters 7 ein sich in Fahrtrichtung F erstreckender Gelenkbolzen 8 vorgesehen. An seinem oberen Ende ist der Adapter 7 mit einer Verriegelungsbuchse 6 und einem mit dieser zusammenwirkenden Verriegelungshebel 9, der einen Sicherungsfeder 10 aufweist, versehen. Die Verriegelungsbuchse 6 ist ebenfalls in ihrem Inneren mit elektrischen Kontakten 18 versehen, die zu den Kontakten 17 im Verriegelungsbolzen 5 korrespondieren.

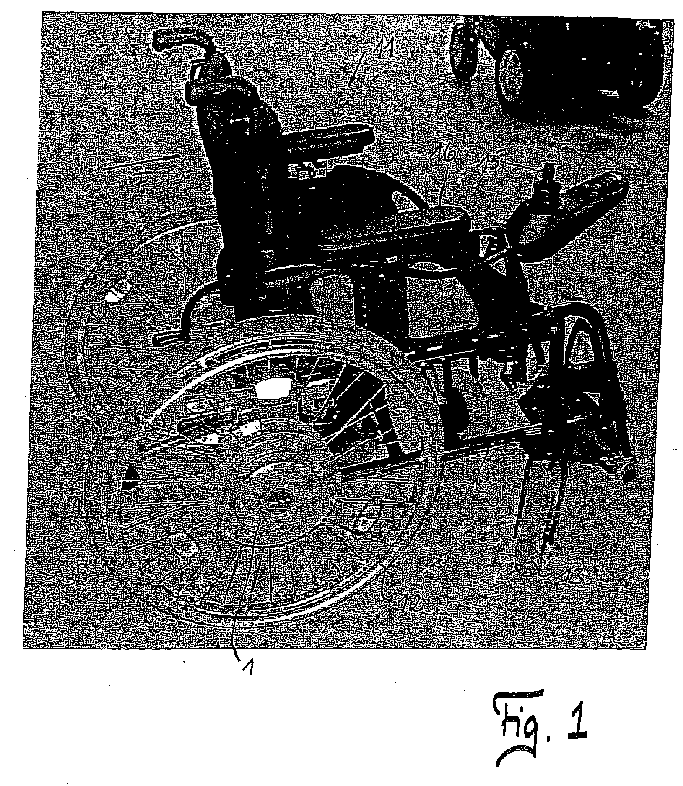

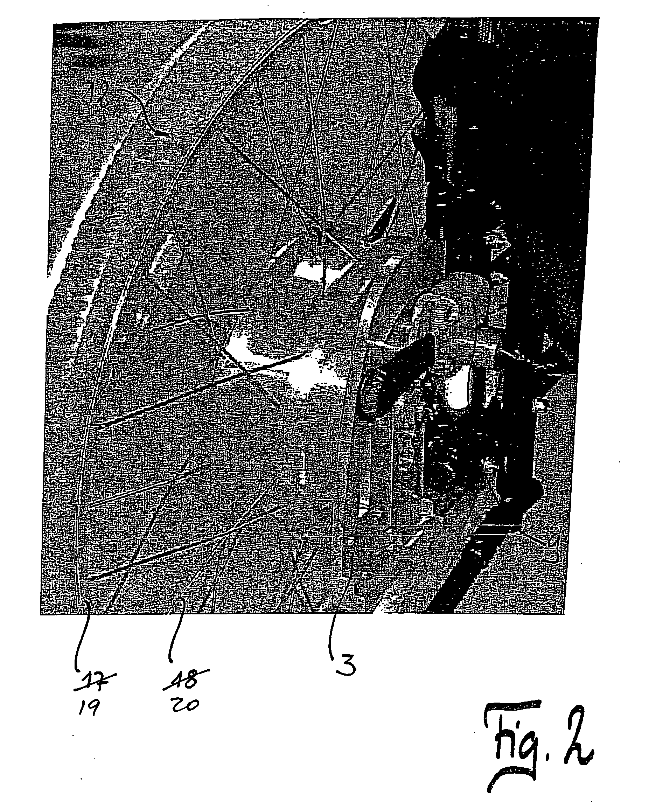

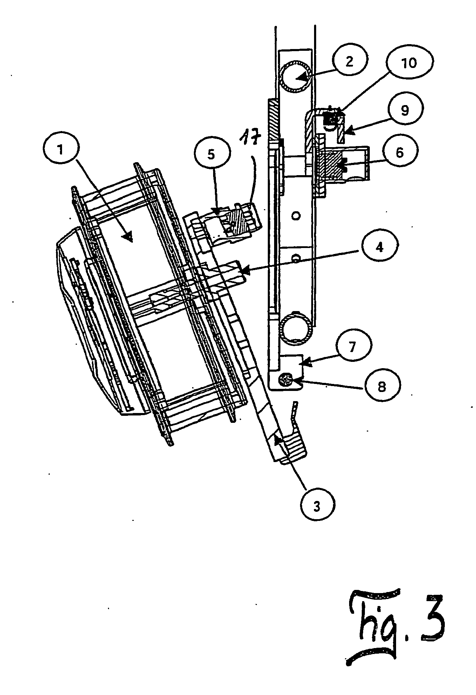

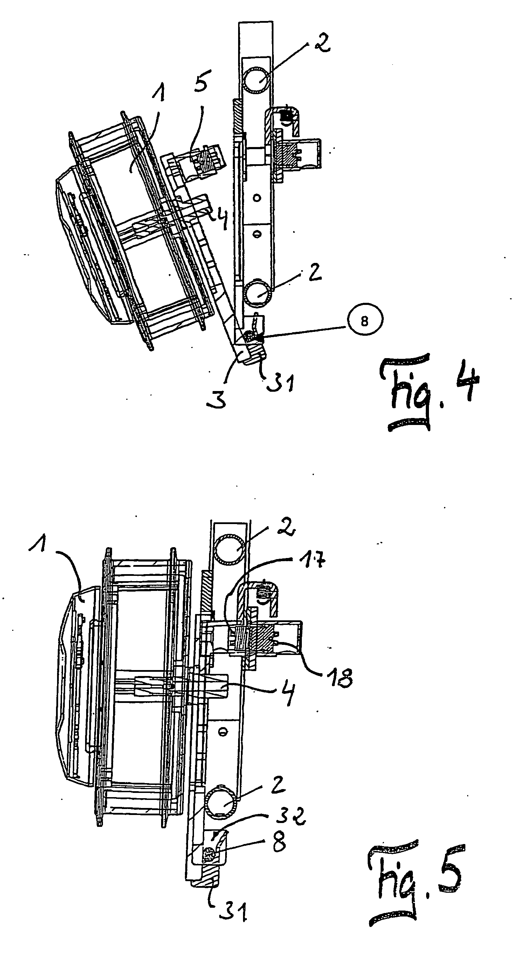

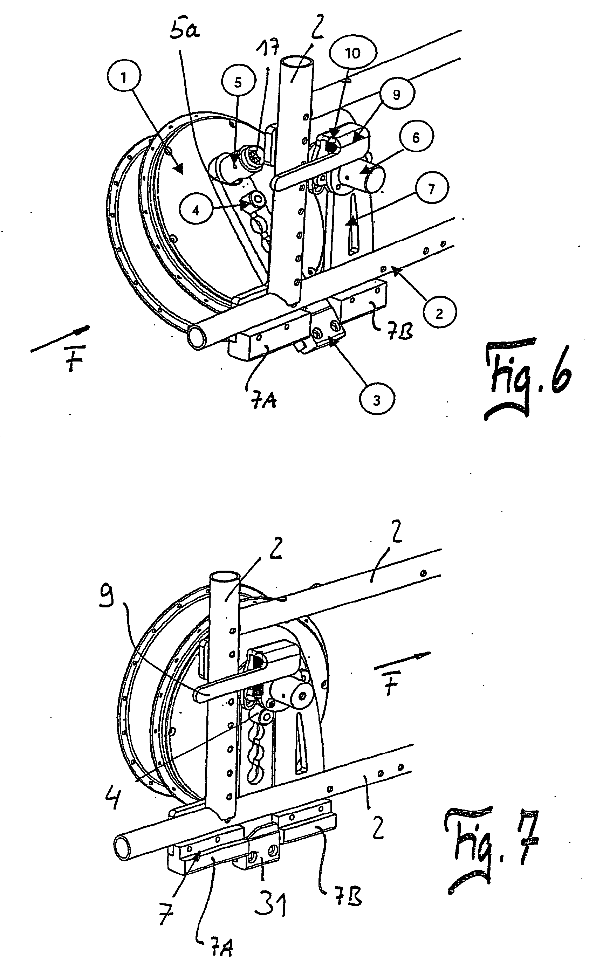

Zur Verbindung des Rades 12 mit dem Rahmen 2 des Rollstuhls 11 wird das Rad 12 schräg unterhalb des Gestells des Rollstuhls 11 angesetzt (vergleiche Figur 3) und die Schwenkplatte 3 mit der Lasche 31 auf den Gelenkbolzen 8 aufgeschoben (vergleiche Figur 4). Anschließend wird das Rad 12 nach oben in Richtung des Rollstuhls 11 geschwenkt, bis der Verriegelungsbolzen 5 in die Verriegelungsbuchse 6 eintaucht und die Sicherungsfeder 10 in eine radiale Ausnehmung 5a im Verriegelungsbolzen 5 einschnappt und dadurch das Rad 12 selbsttätig mit dem Adapter 7 und somit mit dem Rollstuhl 11 verriegelt wird. Beim Verriegelungsvorgang greifen die Kontakte 17 im Verriegelungsbolzen 5 nach Art einer Steckverbindung in die Kontakte 18 in der Buchse 6, so dass der Antriebsmotor 1 mit der Energieversorgung verbunden wird.

Zur Demontage des Rades 12 wird der Verriegelungshebel 9 verschwenkt, so dass die Sicherungsfeder 10 außer Kontakt mit dem Verriegelungsbolzen 5 kommt und das Rad 12 vom Rollstuhl 11 weggeschwenkt und dann nach unten herausgehoben werden kann.

### Bezugszeichenliste:

- 1: Naben-Antriebsmotor/Antriebsmotor
- 2: Rahmen
- 3: Schwenkplatte
- 4: Achsbolzen
- 5: Verriegelungsbolzen
- 5a: radiale Ausnehmung
- 6: Verriegelungsbuchse
- 7: Adapter
- 7A: Lagerbock
- 7B: Lagerbock
- 8: Gelenkbolzen
- 9: Verriegelungshebel
- 10: Sicherungsfeder
- 11: Rollstuhl
- 12: Rad
- 13: Vorderrad
- 14: Bedienpult
- 15: Joystick
- 16: Armlehne
- 17: Kontakte
- 18: Kontakte
- 19: Felge
- 20: Speiche
- 31: Lasche
- 32: Öffnung
- F: Fahrtrichtung

## Patentansprüche

1. Laufradanordnung für einen, insbesondere faltbaren, elektromotorisch antreibbaren Rollstuhl, mit dessen Rahmen (2) Räder (12) lösbar verbindbar sind, wobei in zwei Rädern (12) je ein Antriebsmotor (1) integriert ist und die Verbindung dieser Räder (12) über je einen am Rahmen (2) angeordneten Adapter (7) erfolgt und das in den Adapter (7) eingesetzte Rad über eine Verriegelungseinrichtung (5, 6) mechanisch gegenüber dem Rahmen (2) verriegelbar ist, **gekennzeichnet durch** folgende Merkmale:
a) am Antriebsmotor (1) ist eine Schwenkplatte (3) befestigt,
b) das Rad (12) ist über einen Achsbolzen (4) drehbar in der Schwenkplatte (3) gelagert,
c) im Adapter (7) ist ein in Fahrtrichtung F weisender Gelenkbolzen (8) angeordnet,
d) an einem Ende der Schwenkplatte (3) ist eine im Querschnitt u-förmige Lasche (31) angeordnet,
e) die Lasche (31) ist auf den Gelenkbolzen (8) so aufsetzbar, dass das Rad (12) mittels einer Schwenkbewegung zum Rahmen (2) verlagerbar ist, bis ein an der Schwenkplatte (3) vorgesehener Verriegelungsbolzen (5) in eine am Adapter (7) angeordnete Verriegelungsbuchse (6) eingreift und
f) das Rad über den Verriegelungsbolzen (5) und die Verriegelungsbuchse (6) mechanisch gegenüber dem Rahmen (2) verriegelbar ist.

2. Laufradanordnung nach Anspruch 1, **dadurch gekennzeichnet, dass** der Verriegelungsbolzen (5) und die Verriegelungsbuchse (6) elektrische Kontakte (17, 18) aufweisen, über die die Energieversorgung des in das Rad (12) integrierten Antriebsmotors (1) erfolgt.

3. Laufradanordnung nach Anspruch 1, **dadurch gekennzeichnet, dass** die Verriegelungseinrichtung (5, 9) selbstverriegelnd ausgebildet ist.

## Claims

1. Running wheel arrangement for an in particular collapsible wheelchair which can be driven by electric motor, to whose frame (2) wheels (12) can be releaseably connected, with a respective driving motor (1) being integrated in two wheels (12), and the connection of these wheels (12) taking place via a respective adapter (7) arranged on the frame (2), and the wheel inserted into the adapter (7) being mechanically lockable with respect to the frame (2) via a locking device (5, 6), **characterized by** the following features:
a) a pivot plate (3) is fastened to the driving motor (1),
b) the wheel (12) is mounted rotatably in the pivot plate (3) via an axle bolt (4),
c) a link bolt (8) pointing in the direction of travel F is arranged in the adapter (7),
d) a cross-sectionally U-shaped tab (31) is arranged at one end of the pivot plate (3),
e) the tab (31) can be placed onto the link bolt (8) in such a manner that the wheel (12) can be shifted by means of a pivoting movement toward the frame (2) until a locking bolt (5) provided on the pivot plate (3) engages in a locking bush (6) arranged on the adapter (7), and
f) the wheel can be locked mechanically with respect to the frame (2) via the locking bolt (5) and the locking bush (6).

2. Running wheel arrangement according to Claim 1, **characterized in that** the locking bolt (5) and the locking bush (6) have electric contacts (17, 18) via which the power supply of the driving motor (1) integrated into the wheel (12) takes place.

3. Running wheel arrangement according to Claim 1, **characterized in that** the locking device (6, 10) is of self-locking design.

## Revendications

1. Ensemble roulant pour fauteuil roulant, en particulier pliant, pouvant être entraîné par moteur électrique, au châssis (2) duquel des roues (12) peuvent être fixées de façon amovible, dans lequel un moteur d'entraînement (1) est intégré à chacune des deux roues (12) et la liaison des deux roues (12) est réalisée pour chacune d'elles par un adaptateur (7) agencé sur le châssis (2), la roue insérée dans l'adaptateur (7) pouvant être verrouillée mécaniquement au châssis (2) par un dispositif de verrouillage (5, 6), **caractérisé par** les caractéristiques suivantes :
a) une plaque pivotante (3) est fixée au moteur d'entraînement (1),
b) la roue (12) est montée en rotation à la plaque pivotante (3) grâce à une tige axiale (4),
c) une tige articulée (8) dirigée dans la direction de déplacement F est disposée dans l'adaptateur (7),
d) une éclisse (31) de section transversale en U est disposée à l'une des extrémités de la plaque pivotante (3),
e) l'éclisse (31) peut se poser sur la tige articulée (8) de façon telle que la roue (12) peut se déplacer grâce à un mouvement de pivotement vers le châssis (2), jusqu'à ce qu'une tige de verrouillage (5) prévue sur la plaque pivotante (3) vienne en prise avec un manchon de verrouillage (6) disposé sur l'adaptateur (7) et
f) la roue peut être verrouillée mécaniquement par rapport au châssis (2) au moyen de la tige de verrouillage (5) et du manchon de verrouillage (6).

2. Ensemble roulant selon la revendication 1, **caractérisé en ce que** la tige de verrouillage (5) et le manchon de verrouillage (6) comportent des contacts électriques (17, 18) qui permettent l'alimentation en énergie du moteur d'entraînement (1) intégré dans la roue (12).

3. Ensemble roulant selon la revendication 1, **caractérisé en ce que** le dispositif de verrouillage (5, 9) est réalisé de façon autoverrouillant.
